# NEUE EUROPÄISCHE PATENTSCHRIFT

(11) **EP 2 331 602 B2**
(45) Veröffentlichungstag und Bekanntmachung des Hinweises auf die Entscheidung über den Einspruch: **01.11.2017**
(45) Hinweis auf die Patenterteilung: 09.01.2013
(21) Anmeldenummer: 09783286.9
(22) Anmeldetag: 22.09.2009
(51) Int. Cl.: C08L 67/04, C09D 167/02, C08L 67/02, D21H 19/28

(54) **VERFAHREN ZUR BESCHICHTUNG VON PAPIER**
PROCESS FOR COATING PAPER
PROCÉDÉ DE REVÊTEMENT DE PAPIER

(30) Priorität: 29.09.2008 EP 08165372; 12.08.2009 EP 09010388
(43) Veröffentlichungstag der Anmeldung: 15.06.2011
(73) Patentinhaber: BASF SE, 67056 Ludwigshafen am Rhein (DE)
(72) Erfinder: SKUPIN, Gabriel, 67346 Speyer (DE); LOOS, Robert, 68165 Mannheim (DE); NEVALAINIEN, Kimmo, 48910 Kotka (FI); FÜSSL, Andreas, 69120 Heidelberg (DE)
(74) Vertreter: BASF IP Association
(86) Internationale Anmeldenummer: PCT/EP2009/062262
(87) Internationale Veröffentlichungsnummer: WO 2010/034712

(56) Entgegenhaltungen:
- EP-A1- 1 227 129
- EP-A1- 1 227 129
- EP-A1- 1 657 277
- WO-A1-96/15173
- WO-A1-2006/097353
- WO-A1-2006/097353
- WO-A1-2009/127555
- WO-A1-2009/127556
- WO-A2-92/09654
- DE-A1- 4 440 858
- DE-A1- 4 440 858
- DE-A1- 10 022 552
- DE-A1- 19 638 686
- DE-A1- 19 638 686
- DE-A1-102005 053 068
- JP-A- H08 283 541
- KR-A- 20020 001 580
- US-A- 6 018 004
- US-A- 6 120 895
- US-A1- 2006 051 603
- Product Information-Ecoflex F BX 7011
- Biodegradable Ecoflex grades for paper Coating
- Biodegradable aliphatic-aromatic polyesters: "Ecoflex" pgs. 299-305
- Biodegradable Aliphatic-Aromatic Polyesters: "Ecoflex®"-Biopolymers Online
- Translation of D16
- Translation od D18
- DOW LDPE 722; Low Density Polyethylene Resin
- Total petrochemicals polyethylene LDPE LD 0304
- WO-ISA of September 7, 2010
- Copy of patentee's submission of September 30, 2010
- IPER of January 19, 2011
- BASTIOLI C.: 'Handbook of Biodegradable Polymers', 2005, RAPRA TECHNOLOGY LIMITED Seiten 303 - 337

## Beschreibung

Die vorliegende Erfindung betrifft ein Verfahren zur Beschichtung von Papier durch Extrusionsverfahren, dadurch gekennzeichnet, dass als Beschichtungsmittel ein biologisch abbaubarer, aliphatisch-aromatischer Polyester verwendet wird, enthaltend:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0,01 bis 2 Gew.-%, bezogen auf das Gesamtgewicht der Komponenten i bis iii, eines Kettenverlängerers und /oder Vernetzers ausgewählt aus der Gruppe bestehend aus: einem di oder polyfunktionellen Isocyanat, Isocyanurat, Oxazolin , Epoxid, Carbonsäureanhydrid und /oder einem mindestens trifunktionellen Alkohol oder einer mindestens trifunktionellen Carbonsäure;
v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern und
vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;
und mit einer Schmelzevolumenrate (MVR) nach EN ISO 1133 (190°C, 2,16 kg Gewicht) von 5 bis 25 cm³/10 min.

Des Weiteren betrifft die Erfindung Verfahren zur Beschichtung von Papier durch Extrusionsverfahren, dadurch gekennzeichnet, dass als Beschichtungsmittel eine Polymermischung verwendet wird, enthaltend:
- 5 bis 95 Gew.- % eines biologisch abbaubaren, aliphatisch-aromatischen Polyester gemäß Anspruch 1.
- 95 bis 5 Gew.-% eines oder mehrerer Polymere ausgewählt aus der Gruppe bestehend aus: Polymilchsäure, Polycaprolacton, Polyhydroxyalkanoat, Chitosan, Gluten und eines oder mehrerer aliphatisch/aromatischen Polyesters wie Polybutylensuccinat, Polybutylensuccinat-adipat oder Polybutylensuccinat-sebacat, Polybutylenterephthalat-co-adipat
und
- 0 bis 2 Gew.-% eines Verträglichkeitsvermittlers.

In WO-A 92/09654, WO-A 96/15173, WO-A 2006/097353 bis 56 werden beispielsweise Polybutylenterephthalat-succinate, adipate, sebacate, -azelainate und -brassylate und in der WO 2006/074815 Mischungen dieser aliphatisch-aromatischen Polyester mit anderen biologisch abbaubaren Polymeren wie Polymilchsäure oder Polyhydroxyalkanoaten beschrieben. Die Möglichkeit Papier mit diesen Polymeren oder Polymermischungen zu beschichten wird in diesen Schriften nicht explizit ausgeführt.

Bei den Versuchen Papier mit den bekannten Polyestern und Polyestermischungen zu beschichten, ließen sich nur vergleichsweise dicke Schichten vergleichsweise langsam herstellen.

Ziel der vorliegenden Erfindung war es demnach biologisch abbaubare Polyester bzw. Polyestermischungen bereitzustellen, die zur Papierbeschichtung besser geeignet sind.

Überraschenderweise wurden nun die eingangs erwähnten Verfahren zur Papierbeschichtung gefunden, die dadurch gekennzeichnet sind, dass ein Polyester mit einer Schmelzevolumenrate (MVR) nach EN ISO 1133 (190°C, 2,16 kg Gewicht) von 5 bis 25 cm³/10 min und/oder Polymermischungen enthaltend derartige Polyester verwendet werden.

Insbesondere geeignet sind Polyester mit einer Schmelzevolumenrate (MVR) nach EN ISO 1133 (190°C, 2,16 kg Gewicht) von 5 bis 12 cm³/10 min.

Werden Polymermischungen der Polyester mit anderen biologisch abbaubaren Polymeren, wie insbesondere Polymilchsäure eingesetzt, so hat es sich als vorteilhaft erwiesen, dass auch diese Polymere eine hohe Fließfähigkeit aufweisen.

Beispielsweise hat sich Polymilchsäure mit einer Schmelzevolumenrate (MVR) nach EN ISO 1133 (190°C, 2,16 kg Gewicht) von 4 bis 100 cm³/10 min und besonders bevorzugt von 9 bis 70 cm³/10 min als Mischungspartner bewährt.

Wie zuvor erwähnt, sind zur Papierbeschichtung Polymermischungen besonders gut geeignet, die aus einem fließfähigen Polyester und einem fließfähigen Mischungspartner wie insbesondere Polymilchsäure bestehen. Für die erhaltene Polymermischung ergibt sich vorzugsweise einer Schmelzevolumenrate (MVR) nach EN ISO 1133 (190°C, 2,16 kg Gewicht) von 4 bis 70 cm³/10 min und besonders bevorzugt von 10 bis 30 cm³/10 min. Weiterhin sind Mischungen von fließfähigen Polyestern mit den zuvor genannten fließfähigen Polymermischungen für die Papierbeschichtung geeignet.

Unter teilaromatischen Polyestern auf Basis von aliphatischen Diolen und aliphatisch/aromatischen Dicarbonsäuren werden auch Polyesterderivate verstanden wie Polyetherester, Polyesteramide oder Polyetheresteramide. Zu den geeigneten teilaromatischen Polyestern gehören lineare nicht kettenverlängerte Polyester (WO 92/09654). Insbesondere sind aliphatisch/aromatische Polyester aus Butandiol, Terephthalsäure und aliphatischen C₆-C₁₈-Dicarbonsäuren wie Adipinsäure, Korksäure, Azelainsäure, Sebazinsäure und Brassylsäure (beispielsweise wie in WO 2006/097353 bis 56 beschrieben) geeignete Mischungspartner. Bevorzugt werden kettenverlängerte und/oder verzweigte teilaromatische Polyester. Letztere sind aus den eingangs genannten Schriften WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht.

Wie eingangs erwähnt sind für das erfindungsgemäße Papierbeschichtungsverfahren biologisch abbaubare, aliphatisch-aromatischer Polyester geeignet, die enthalten:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0,01 bis 2 Gew.-%, bezogen auf das Gesamtgewicht der Komponenten i bis iii, eines Kettenverlängerers und /oder Vernetzers ausgewählt aus der Gruppe bestehend aus: einem di oder polyfunktionellen Isocyanat, Isocyanurat, Oxazolin , Epoxid, Carbonsäureanhydrid und /oder einem mindestens trifunktionellen Alkohol oder einer mindestens trifunktionellen Carbonsäure;
v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern und
vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;
und mit einer Schmelzevolumenrate (MVR) nach EN ISO 1133 (190°C, 2,16 kg Gewicht) von 5 bis 25 cm³/10 min geeignet.

Bevorzugt eingesetzte aliphatisch-aromatischen Polyester enthalten:
i) 52 bis 65 und insbesondere 58 mol %, bezogen auf die Komponenten i bis ii, eines oder mehrerer Dicarbonsäurederivate oder Dicarbonsäuren ausgewählt aus der Gruppe bestehend aus Bernsteinsäure, Azelainsäure, Brassylsäure und vorzugsweise Adipinsäure, insbesondere bevorzugt Sebazinsäure;
ii) 48 bis 35 und insbesondere 42 mol %, bezogen auf die Komponenten i bis ii, eines Terephthalsäurederivats;
iii) 98 bis102 mol %, bezogen auf die Komponenten i bis ii, 1,4-Butandiol und
iv) 0,01 bis 2 Gew.-%, bezogen auf das Gesamtgewicht der Komponenten i bis iii, eines Kettenverlängerers und /oder Vernetzers ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere eines epoxidhaltigen Poly(meth)acrylats) und /oder einem mindestens trifunktionellen Alkohol oder einer mindestens trifunktionellen Carbonsäure.

Zur Papierbeschichtung sind insbesondere aliphatisch-aromatische Polyester mit einem hohen Anteil an aliphatischer Dicarbonsäure von 52 bis 65 und insbesondere bevorzugt von 52 bis 58 mol %, geeignet. Mit einem höheren Anteil der aliphatischen Dicarbonsäure in den aliphatisch-aromatischen Polyestern lassen sich dünnere Schichten realisieren. Folien aus diesen Polyestern zeigen in Beschichtungsanlagen eine geringere Tendenz zur Schmelzeresonanz.

Als aliphatische Dicarbonsäuren eignen sich bevorzugt Adipinsäure und insbesondere bevorzugt Sebazinsäure. Sebazinsäurehaltige Polyester haben den Vorteil, dass sie auch als nachwachsender Rohstoff zur Verfügung stehen sind und sich zu dünneren Folien ausziehen lassen. Folien aus diesen Polyestern zeigen in Beschichtungsanlagen ferner eine geringere Tendenz zur Schmelzeresonanz.

Die Synthese der beschriebenen Polyester erfolgt nach den in WO-A 92/09654, WO-A 96/15173 oder vorzugsweise in PCT/EP2009/054114 und PCT/EP2009/054116 beschriebenen Verfahren, vorzugsweise in einer zweistufigen Reaktionskaskade. Zunächst werden die Dicarbonsäurederivate zusammen mit dem Diol in Anwesenheit eines Umesterungskatalysators zu einem Präpolyester umgesetzt. Dieser Präpolyester weist im Allgemeinen eine Viskositätszahl (VZ) von 50 bis 100mL/g, vorzugsweise 60 bis 80 mL/g auf. Als Katalysatoren werden üblicherweise Zink-, Aluminium- und insbesondere Titankatalysatoren eingesetzt. Titankatalysatoren wie Tetra(isopropyl)ortho-titanat und insbesondere Tetrabutylorthotitanat (TBOT) haben gegenüber den in der Literatur häufig verwendeten Zinn-, Antimon-, Kobalt- und Bleikatalysatoren wie beispielsweise Zinndioctanat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie über die Kompostierung unmittelbar in die Umwelt gelangen können.

Mit den beiden obengenannten Verfahren lässt sich der gewünschte MVR-Bereich allein schon durch die Wahl der Verfahrensparameter wie Verweilzeit, Reaktionstemperatur, und Kopfabzugmenge am Turmreaktor maßschneidern.

Anpassungen des MVR zu höheren Werten, lassen sich durch Zugabe von Komponente iv) im angegebenen Konzentrationsbereich oder bei den Polymermischungen durch einen geeigneten Verträglichkeitsvermittler erzielen.

Die erfindungsgemäßen Polyester werden anschließend in einem zweiten Schritt nach den in WO 96/15173 und EP-A 488 617 beschriebenen Verfahren hergestellt. Der Präpolyester wird mit Kettenverlängerern vib), beispielsweise mit Diisocyanaten oder mit epoxidhaltigen Polymethacrylaten in einer Kettenverlängerungsreaktion zu einem Polyester mit einer VZ von 50 bis 450 mUg, vorzugsweise 80 bis 250 mL/g umgesetzt.

In der Regel werden 0,01 bis 2 Gew.-%, vorzugsweise 0,2 bis 1,5 Gew.-% und insbesondere bevorzugt 0,35 bis 1Gew.-% bezogen auf das Gesamtgewicht der Komponenten i bis iii, eines Vernetzers (iva) und/oder Kettenverlängerers (ivb) ausgewählt aus der Gruppe bestehend aus: einem polyfunktionellen Isocyanat, Isocyanurat, Oxazolin, Epoxid, Carbonsäureanhydrid , einem mindestens trifunktionellen Alkohol oder einer mindestens trifunktionellen Carbonsäure eingesetzt. Als Kettenverlängerer (ivb) kommen polyfunktionelle und insbesondere difunktionelle Isocyanate, Isocyanurate, Oxazoline, Carbonsäureanhydrid oder Epoxide in Frage.

Kettenverlängerer sowie Alkohole oder Carbonsäurederivate mit mindestens drei funktionellen Gruppen können auch als Vernetzer aufgefasst werden. Besonders bevorzugte Verbindungen haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponenten iv lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen. Die Verbindungen iv wirken scherentzähend, d.h. die Viskosität unter Belastung wird geringer.

Beispiele für Kettenverlängerer werden im Folgenden näher beschrieben.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mw der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet ist Joncryl^{®} ADR 4368.

In der Regel ist es sinnvoll die vernetzenden (mindestens trifunktionellen) Verbindungen zu einem früheren Zeitpunkt der Polymerisation zuzugeben.

Als bifunktionelle Kettenverlängerer eignen sich die folgenden Verbindungen:
Unter einem aromatischen Diisocyanat ivb werden vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylendiisocyanat verstanden. Darunter werden 2,2'-, 2,4'- sowie 4,4'-Diphenylmethandiisocyanat besonders bevorzugt. Im Allgemeinen werden letztere Diisocyanate als Mischung eingesetzt. In untergeordneten Mengen, z.B. bis zu 5 Gew.-%, bezogen auf das Gesamtgewicht können die Diisocyanate auch Urethiongruppen, beispielsweise zum Verkappen der Isocyanatgruppen, enthalten.

Unter einem aliphatischen Diisocyanat werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate sind Isophorondiisocyanat und insbesondere 1,6-Hexamethylendiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des 1,6-Hexamethylendiisocyanats.

2,2'-Bisoxazoline sind im Allgemeinen erhältlich durch das Verfahren aus Angew. Chem. Int. Ed., Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Die erfindungsgemäßen Polyester weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Die aliphatische Dicarbonsäure i wird in 40 bis 70 mol % vorzugsweise 52 bis 65 mol% und insbesondere bevorzugt 52 bis 58 mol%, bezogen auf die Säurekomponenten i und ii eingesetzt. Sebazinsäure, Azelainsäure und Brassylsäure sind aus nachwachsenden Rohstoffen, insbesondere aus Rizinusöl zugänglich.

Die Terephthalsäure ii wird in 60 bis 30 mol % vorzugsweise 48 bis 35 mol% und insbesondere bevorzugt 48 bis 42 mol%, bezogen auf die Säurekomponenten i und ii eingesetzt.

Terephthal- und aliphatische Dicarbonsäure können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Diisopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch eingesetzt werden.

1,4-Butandiol ist aus nachwachsenden Rohstoffen zugänglich. PCT/EP2008/006714 offenbart ein biotechnologisches Verfahren zur Herstellung von 1,4-Butandiol ausgehend von unterschiedlichen Kohlehydraten mit Mikroorganismen aus der Klasse der *Pasteurellaceae.*

In der Regel wird zu Beginn der Polymerisation das Diol (Komponente iii) zu den Säuren (Komponenten i und ii) in einem Verhältnis von Diol zu Disäuren von 1,0 bis 2,5 : 1 und vorzugsweise 1,3 bis 2,2 : 1eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Diol/Disäuren-Verhältnis von 0,98 bis 1,02 : 1 verstanden.

Die genannten Polyester können Hydroxy- und/oder Carboxylend-gruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Bevorzugt sind Polyester mit Säurezahlen kleiner als 1,5 mg KOH/g.

In einer bevorzugten Ausführungsform werden 1 bis 80 Gew.-%, bevorzugt 5 bis 35 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern und zugesetzt.

Stärke und Amylose können nativ, d.h. nicht thermoplastifiziert oder mit Weichmachern wie beispielsweise Glycerin oder Sorbit thermoplastifiziert sein (EP-A 539 541, EP-A 575 349, EP 652 910).

Unter Naturfasern werden zum Beispiel Cellulosefasern, Hanffasern, Sisal, Kenaf, Jute, Flax, Abacca, Kokosfaser oder Cordenkafasern verstanden.

Als bevorzugte faserförmige Füllstoffe seien Glasfasern, Kohlenstofffasern, AramidFasern, Kaliumtitanat-Fasern und Naturfasern genannt, wobei Glasfasern als E-Glas besonders bevorzugt sind. Diese können als Rovings oder insbesondere als Schnittglas in den handelsüblichen Formen eingesetzt werden. Diese Fasern weisen im Allgemeinen einen Durchmesser von 3 bis 30µm, bevorzugt 6 bis 20µm und besonderes bevorzugt von 8 bis 15µm auf. Die Faserlänge im Compound beträgt in der Regel 20µm bis 1000µm, bevorzugt 180 bis 500µm und besonderes bevorzugt 200 bis 400µm.

Die erfindungsgemäßen biologisch abbaubaren Polyestermischungen können weitere dem Fachmann bekannte, aber nicht erfindungswesentliche Inhaltsstoffe enthalten. Beispielsweise die in der Kunststofftechnik üblichen Zusatzstoffe wie Stabilisatoren; Nukleierungsmittel wie Polybutylenterephthalat, N,N'-Ethylen-bis-stearylamid, Zinkphenylphosphonat, Graphit, Talkum, Kreide, gefälltes Calciumcarbonat, Kaolin, Quarzsand Silikat; Gleit- und Trennmittel wie Stearate (insbesondere Calziumstearat); Weichmacher (Plastifizierer) wie beispielsweise Zitronensäureester (insbesondere Acetyltributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein. Besonders bevorzugt ist der Einsatz von 0,1 bis 1 Gew.-% Nukleierungsmittel.

Die Herstellung der erfindungsgemäßen biologisch abbaubaren Copolymermischungen aus den einzelnen Komponenten kann nach bekannten Verfahren erfolgen (EP 792 309 und US 5,883,199). Beispielsweise können alle Mischungspartner in einem Verfahrensschritt in dem Fachmann bekannten Mischvorrichtungen, beispielsweise Knetern oder Extrudern bei erhöhten Temperaturen, beispielsweise von 120°C bis 300°C, gemischt und zur Reaktion gebracht werden.

Typische Copolymermischungen enthalten:
- 5 bis 95 Gew.- % vorzugsweise 30 bis 90 Gew.-%, insbesondere bevorzugt 50 bis 70 Gew.-% eines erfindungsgemäßen Copolymers und
- 95 bis 5 Gew.-% vorzugsweise 70 bis 10 Gew.-%, insbesondere bevorzugt 50 bis 30 Gew.-% eines oder mehrerer Polymere ausgewählt aus der Gruppe bestehend aus: Polymilchsäure, Polycaprolacton, Polyhydroxyalkanoat, Chitosan und Gluten und eines oder mehrerer Polyester auf Basis von aliphatischen Diolen und aliphatisch/aromatischen Dicarbonsäuren wie zum Beispiel Polybutylensuccinat (PBS), Polybutylensuccinat-adipat (PBSA), Polybutylensuccinat-sebacat (PBSSe), Polybutylenterephthalt-co-adipat (PBTA) und
- 0 bis 2 Gew.-% eines Verträglichkeitsvermittlers.

Vorzugsweise enthalten die Copolymermischungen ihrerseits 0,05 bis 2 Gew.-% eines Verträglichkeitsvermittlers. Bevorzugte Verträglichkeitsvermittler sind Carbonsäureanhydride wie Maleinsäureanhydrid und insbesondere die zuvor beschriebenen epoxidgruppen-haltige Copolymere auf Basis Styrol, Acrylsäureester und/oder Methacrylsäureester. Die Epoxidgruppen tragenden Einheiten sind vorzugsweise Glycidyl(meth)acrylate. Epoxidgruppen-haltige Copolymere des obengenannten Typs werden beispielsweise von der BASF Resins B.V. unter der Marke Joncryl^{®} ADR vertrieben. Als Verträglichkeitsvermittler besonders geeignet ist beispielsweise Joncryl^{®} ADR 4368.

Geeignete Polyestermischungen enthalten
- 20 bis 90 Gew.- % bevorzugt 30 % bis 50%, besonders bevorzugt 35 % bis 45 % eines Copolymer gemäß den Ansprüchen 1 bis3 und
- 80 bis 10 Gew.-%, bevorzugt 70 % bis 50%, besonders bevorzugt 65 % bis 55 % eines oder mehrerer Polymere ausgewählt aus der Gruppe bestehend aus: Polyhydroxyalkanoat und insbesondere Polymilchsäure und
- 0 bis 2 Gew.-% eines epoxidhaltigen Poly(meth)acrylats

Polymermischungen können als Trockenmischungen oder als Compounds eingesetzt werden.

Als biologisch abbaubaren Polyester ist beispielsweise Polymilchsäure geeignet. Polymilchsäure mit dem folgenden Eigenschaftsprofil wird bevorzugt eingesetzt:
- einer Schmelzvolumenrate (MVR bei 190° C und 2.16 kg nach ISO 1133 von 0.5 bis 100 bevorzugt 5 bis 70, besonders bevorzugt 9 bis 50 ml/10 Minuten
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%.
- einem Molekulargewicht von größer 50 000 Dalton.

Bevorzugte Polymilchsäuren sind beispielsweise NatureWorks^{®} 6201 D, 6202 D, 6251 D, 3051 D und insbesondere 3251 D (Polymilchsäure der Fa. NatureWorks).

Polymermischungen die einen aliphatisch-aromatischen Polyester gemäß Anspruch 1 und Polymilchsäure enthalten sind besonders gut für die Papierbeschichtung geeignet. Insbesondere haben sich hier Polymermischungen als günstig erwiesen, in denen die Polymilchsäure die kontinuierliche Phase ausbildet. Gewährleistet wird dies häufig in Polymermischungen, die mehr als 50 Gew.-% Polymilchsäure enthalten. Diese Mischungen zeichnen sich im Vergleich zum reinen PLA durch eine niedrigere Einschnürung der Schmelzefahne nach Verlassen der Flachdüse aus - der sogenannte Neck-in ist um mindestens 10 %, bevorzugt 20 - 80 % besonders bevorzugt um 30 - 60 % reduziert. Im Vergleich zum reinen Poly-Butylen-Adipat-Terephthalat PBAT ist die Schmelzefahne deutlich stabiler und erlaubt eine bessere Ausziehfähigkeit auf < 30 g/m², bevorzugt < 20 g/ m² besonders bevorzugt < 17 g/m². Die gute Haftung zum Cellulosesubstrat (Papier, Karton) bleibt abhängig von den Abkühlbedingungen durch hohe Bahngeschwindigkeiten > 100 m/min. erhalten.

Unter Polyhydroxyalkanoaten werden in erster Linie Poly-4-hydroxybutyrate und Poly-3-hydroxybutyrate verstanden, weiterhin sind Copolyester der vorgenannten Hydroxybutyrate mit 3-Hydroxyvaleraten oder 3-Hydroxyhexanoat umfasst. Poly-3-hydroxy-butyrate-co-4-hydroxybutyrate sind insbesondere von der Fa. Metabolix bekannt. Sie werden unter dem Handelsnamen Mirel^{®} vertrieben. Poly-3-hydroxybutyrate-co-3-hydroxyhexanoate sind von der Fa. P&G oder Kaneka bekannt. Poly-3-hydroxybutyrate werden beispielsweise von der Fa. PHB Industrial unter dem Markennamen Biocycle^{®} und von der Fa. Tianan unter dem Namen Enmat^{®} vertrieben.

Die Polyhydroxyalkanoate weisen in der Regel ein Molekulargewicht Mw von 100.000 bis 1.000.000 und vorzugsweise von 300.000 bis 600.000 auf.

Polycaprolacton wird von der Fa. Daicel unter dem Produktnamen Placcel^{®} vermarktet.

Die eingangs erwähnten Polyester und Polymermischungen weisen eine hohe biologische Abbaubarkeit bei gleichzeitig guten Filmeigenschaften auf.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.
Die Polyester des erfindungsgemäßen Verfahrens haben zudem sehr gute Hafteigenschaften. Für deren Herstellung eignet sich sowohl die Extrusionsbeschichtung wie auch Laminierverfahren. Auch eine Kombination dieser Verfahren ist denkbar.

Das erfindungsgemäße Verfahren kann beispielsweise zur Papierbeschichtung mit Monolayern herangezogen werden (einlagige Beschichtung). Die mittlere Grammatur liegt hier in der Regel bei 10 bis 50 und vorzugsweise bei 15 bis 30 g/m².

Die Grammatur wird mit Hilfe von ausgestanzten Ronden bestimmt, die in der Regel einen Durchmesser von 4,5 Inch (114,3 mm) aufweisen. Die beschichtete und die unbeschichtete Ronde werden gewogen. Über die Gewichtsdifferenz und die bekannte Fläche kann die Grammatur in g/m² angegeben werden.

Aber auch mehrlagige Beschichtungen sind bei Papier durchaus üblich. In der Regel werden 2 bis 7 Schichten und vorzugsweise 2 bis 3 Schichten in der Papierbeschichtung eingesetzt. Die mehrlagige Beschichtung bietet die Möglichkeit die Schweißeigenschaften, die Barriereeigenschaften und die Haftung der Beschichtung auf Karton für die Schichten einzeln zu optimieren. Die mittlere Grammatur liegt hier in der Regel bei 10 bis 60 und vorzugsweise bei 15 bis 35 g/m².

So muss eine äußere Schicht oder Deckschicht, in der Regel beispielsweise kratzfest, temperaturstabil und wenig klebend sein. Die Klebeneigung muss reduziert sein, um allein schon ein Kleben der Folie an der Chill-Roll im Herstellprozess zu vermeiden.

Vorzugsweise besteht sie aus einer Mischung aus 40 bis 60 Gew.-% eines aliphatisch-aromatischen Polyesters und 60 bis 40 Gew.-% Polymilchsäure und 0 bis 10 Gew.-% einer Wachsformulierung mit 0 bis 5 Gew.-% Wachs, 0 bis10 Gew.-% Dispergierhilfe (z.B. Metallsalze der Stearinsäure, Ölsäure, Ethylen-bis-Stearylamid, Säureamide (z.B. Erucasäureamid, Ölsäureamid) ) und 0 bis 5 % Antiblockmittel.

Die mittlere Schicht ist in der Regel steifer und kann auch als Trägerschicht oder Barriereschicht bezeichnet werden. In der Papierbeschichtung mit dünnen Filmen kann auf die mittlere Schicht auch ganz verzichtet werden. Die mittlere Schicht enthält vorzugsweise 50 bis 100 Gew.-% Polymilchsäure und 0 bis 50 Gew.-% des aliphatisch-aromatischen Polyesters.

Die innere Schicht stellt die Kontaktschicht zum Karton her. Sie muss in der Regel weich sein und auf dem Karton bzw. dem Papier gut haften. Sie besteht vorzugsweise aus 50 bis 100 % eines aliphatisch-aromatischen Polyesters und 0 bis 50 % Polymilchsäure.

Die dreilagige Beschichtung von Papier ist bevorzugt. Die Beschichtung setzt sich vorzugsweise wie folgt zusammen:
i) eine äußeren Schicht enthaltend eine Mischung aus 40 bis 60 Gew.-% eines aliphatisch-aromatischen Polyesters und 60 bis 40 Gew.-% Polymilchsäure und 0 bis 10 Gew.-% einer Wachsformulierung mit Wachs, Dispergierhilfe und Antiblockmitteln; Im Allgemeinen macht die äußere Schicht 20 bis 40 % der Schichtdicke aus.
ii) eine mittlere Schicht enthaltend 50 bis 100 Gew.-% Polymilchsäure und 0 bis 50 Gew.-% des aliphatisch-aromatischen Polyesters ; Im Allgemeinen macht die mittlere Schicht 20 bis 40 % der Schichtdicke aus; und
iii) eine innere Kontaktschicht zum Karton aus 50 bis 100 % aliphatisch-aromatischen Polyesters und 0 bis 50 % Polymilchsäure. Im Allgemeinen macht die innere Schicht 20 bis 40 % der Schichtdicke aus.

Die zweilagige Beschichtung von Papier ist ebenfalls bevorzugt. Die Beschichtung setzt sich vorzugsweise wie folgt zusammen:
i) eine äußeren Schicht enthaltend eine Mischung aus 40 bis 60 Gew.-% eines aliphatisch-aromatischen Polyesters und 60 bis 40 Gew.-% Polymilchsäure und 0 bis 10 Gew.-% einer Wachsformulierung mit Wachs, Dispergierhilfe und Antiblockmitteln; ; Im Allgemeinen macht die äußere Schicht 20 bis 50 % der Schichtdicke aus.
iii) eine innere Kontaktschicht zum Karton aus 50 bis 100 % aliphatisch-aromatischen Polyesters und 0 bis 50 % Polymilchsäure. Hier übernimmt die innere Schicht in der Regel die Träger- und/oder Barrierefunktion. Im Allgemeinen macht die innere Schicht 50 bis 80 % der Schichtdicke aus.

Zur mehrlagigen Beschichtung von Papier werden im Allgemeinen Coextrusionsverfahren herangezogen. Bevorzugt ist die Coextrusionsbeschichtung.

Die Extrusionsbeschichtung wurde entwickelt, um dünne Polymerschichten auf flexible Substrate wie Papier, Karton, oder Mehrschichtfolien mit Metallschicht mit hohen Bahngeschwindigkeiten von 100 - 600 m/min. aufzubringen. Die erfindungsgemäßen Polyester schützen das Substrat vor Öl, Fett und Feuchtigkeit und ermöglichen durch ihree Verschweißbarkeit mit sich selbst und Papier, Karton und Metall die Herstellung von beispielsweise Kaffeebechern, Getränkekartons oder Kartons für Gefriergut.
Die erfindungsgemäßen Polyester können auf existierenden Extrusionsbeschichtungsanlagen für Polyethylen verarbeitet werden (J. Nentwig: Kunststofffolien, Hanser Verlag, München 2006, S. 195; H. J. Saechtling: Kunststoff Taschenbuch, Hanser Verlag, München 2007, S. 256; C. Rauwendaal:L Polymer Extrusion, Hanser Verlag, München 2004, S. 547).

Neben der erhöhten Adhäsion auf Papier und Karton zeigen die im erfindungsgemäßen Verfahren verwendeten Polyester und Polyestermischungen im Vergleich zu bekannten Lösungen in der Extrusionsbeschichtung eine geringere Tendenz zur Schmelzeresonanz, so dass im Beschichtungsprozess mit erhöhten Bahngeschwindigkeiten gearbeitet werden und eine signifikante Materialeinsparung erzielt werden kann.

Insbesondere eignet sich das erfindungsgemäße Verfahren zur Beschichtung von Papier zur Herstellung von Papierbeuteln für trockene Lebensmittel wie z.B. Kaffee, Tee, Suppenpulver, Saucenpulver; für Flüssigkeiten wie z.B. Kosmetika, Reinigungsmittel, Getränke; von Papiertragetaschen; von Papier coextrudaten für Eiscreme, Süßwaren (z.B. Schoko- und Müsli-Riegel), von Papierklebeband; von Kartonbechern (Pappbechern), Yoghurtbechern; von Menueschalen; von gewickelten Kartonbehältern (Dosen, Fässer), von nassfesten Kartons für Umverpackungen (Weinflaschen Lebensmittel); von Obststeigen aus beschichtetem Karton; von Fast Food-Teller; von Clamp Shells; von Getränkekartons und Kartons für Flüssigkeiten wie Wasch- und Reinigungsmittel, Gefriergutkartons, Eisverpackungen (z. B. Eisbecher, Einwickler für konische Eiscreme-Waffeln); von Papieretiketten; von Blumen- und Pflanztöpfen.

### Anwendungstechnische Messungen:

Die Molekulargewichte Mn und Mw der teilaromatischen Polyester wurden wie folgt bestimmt:
15 mg der teilaromatischen Polyester wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex^{®} HFIP-800P (Durchmesser 8 mm, Länge 5 cm), Shodex^{®} HFIP-803 (Durchmesser 8 mm, Länge 30 cm), Shodex^{®} HFIP-803 (Durchmesser 8 mm, Länge 30 cm). Die teilaromatischen Polyester wurden mittels eines RI-Detektors (Differential-Refraktometrie) detektiert. Die Kalibrierung erfolgte mit eng verteilten Polymethylmethacrylat-Standards mit Molekulargewichten von Mₙ = 505 bis Mₙ = 2.740.000. Außerhalb dieses Intervalls liegende Elutionsbereiche wurden durch Extrapolation bestimmt.

Die Bestimmung der Viskositätszahlen erfolgte nach DIN 53728 Teil 3, 3. Januar 1985, Kapillarviskosimetrie. Zum Einsatz kam eine Mikro-Ubbelohde, Typ M-II. Als Lösungsmittel wurde das Gemisch: Phenol/Dichlorbenzol im Gewichtsverhältnis 50/50 verwendet.

Die Bestimmung der Schmelze-Volumenfließrate (MVR) erfolgte nach EN ISO 1133. Die Prüfbedingungen betrugen 190°C, 2,16 kg. Die Aufschmelzzeit betrug 4 Minuten. Der MVR gibt die Geschwindigkeit der Extrusion eines geschmolzenen Kunststoff-Formteils durch ein Extrusionswerkzeug von festgelegter Länge und festgelegtem Durchmesser unter den vorbeschriebenen Bedingungen: Temperatur, Belastung und Lage des Kolbens. Bestimmt wird das in einer festgelegten Zeit extrudierte Volumen im Zylinder eines Extrusionsplastometers.

Die Schichtdicke wurde bestimmt aus gestanzten Ronden von 114,3 mm (4,5 Inch) Durchmesser. Die beschichtete und unbeschichtete Ronde wurde gewogen und die Gewichtsdifferenz ermittelt, mit der die Grammatur (Gewichtsdifferenz/Rondenfläche) berechnet wurde. Die Polymerdichte betrug in den folgenden Beispielen 1,25 g/cm³. Damit konnten die mittleren Schichtdicken in µm berechnet werden.

Die Abbauraten der biologisch abbaubaren Polyestermischungen und der zum Vergleich hergestellten Mischungen wurden wie folgt bestimmt:
Aus den biologisch abbaubaren Polyestermischungen und den zum Vergleich hergestellten Mischungen wurden durch Pressen bei 190°C jeweils Folien mit einer Dicke von 30 µm hergestellt. Diese Folien wurden jeweils in quadratische Stücke mit Kantenlängen von 2 x 5 cm geschnitten. Das Gewicht dieser Folienstücke wurde jeweils bestimmt und als "100 Gew.-%" definiert. Über einen Zeitraum von vier Wochen wurden die Folienstücke in einem Trockenschrank in einer mit befeuchteter Komposterde gefüllten Kunststoffdose auf 58 °C erhitzt. Im Wochenabstand wurde jeweils das verbleibende Gewicht der Folienstücke gemessen und auf Gew.-% (bezogen auf das zu Versuchsbeginn ermittelte und als "100 Gew.-%" definierte Gewicht) umgerechnet.

### Versuchsaufbau:

Die Technikumsbeschichtungsanlage (ER-WE-PA) bestand aus einem Hauptextruder A (Reifenhäuser, 80 mm Durchmesser - 30 D) und 3 Extrudern (B, C, D) mit 60 mm Durchmesser/ 25 D Länge. Bei Einsatz von Ecoflex F BX 7011 (ein Polybutylenterephthalatadipat der Fa. BASF SE mit einem MVR von ca. 2,5 cm³/10 min, alle im Folgenden verwendeten MVR-Werte sind nach EN ISO 1133 (190°C, 2,16 kg Gewicht) bestimmt) ließ sich ein Durchsatz von ca. 90 kg/h bei 81 1/min erzielen. Der Durchsatz des Hauptextruders (Reifenhäuser, 80 mm Durchmesser - 30 D) betrug 190 kg/h bei einer Drehzahl von 77 1/min. Der Durchsatz der Extruder wurde variiert, um möglichst dünne Schichtdicken zu erreichen.

Die Koextrusions-Anlage verfügte über ein Werkzeug zur Düsenkoextrusion, die eine Koextrusion von bis zu 7 Schichten mit einer Düsenbreite von 1000 mm und einer Regelspaltweite von 0,5 mm zuließ. Durch Einsätze in den Schmelzekanal konnten verschiedene Schichten gemeinsam verwendet werden. Die Anlage war mit einem Zweischicht-Adapter Einsatz (Fa. Cloeren, mit Randeinkapselung) der Form AAABBBB mit dem Hauptextruder als Extruder A und einem 60 er als Extruder B ausgerüstet. Die äußere Schicht A wurde mit 40 % der Gesamtdicke, die innere Schicht B auf dem Karton mit 60 % der Gesamtdicke gefahren.

Als Kartonmaterial wurde ein typisches Material für Kaffeebecher verwendet, das ein Flächengewicht (Grammatur) von ca. 200 g/m² aufweist. Das Kartonmaterial wurde vor dem Auftreffen der Kunststoffschmelze mit einer Flammionisierungsanlage aktiviert (Gasbrenner).

Alle Beschichtungen wurden mit einer Massetemperatur von 250 °C und einem normalen Anpressdruck auf die Chill-Roll von 4 bar auf den Karton extrudiert. Dabei wurde die Bahngeschwindigkeit zwischen 30 m/min und 200 m/min variiert. Höhere Geschwindigkeiten führten auf der Technikumsanlage in Abhängigkeit vom Produkt zu einer Schmelzeresonanz.

### Eingesetzte Polyester:

### Polyester 1

Als Referenzmaterial wurde zunächst Ecoflex F BX 7011 (ein Polybutylenterephthalatadipat der Fa. BASF SE) mit einem MVR von 2,5 cm³/10 min eingesetzt.

### Polyester 1/Wachs Blend

Um das Ankleben auf der Chillroll zu reduzieren wurde der käuflich erhältliche Ecoflex Batch SL 2 auf Basis von Ecoflex F BX 7011 eingesetzt, der 5 % eines biologisch abbaubaren Wachses und 10 % Calciumstearat enthält.

### Polyester 2

Ein Polybutylenterephthalatsebacat mit einem MVR von 3,3 cm³/10 min.

### Polyester 2/Wachs Blend

Der Blend ist eine Trockenmischung und enthält 85 Gew.-% Polyester 2, 5 % eines biologisch abbaubaren Wachses und 10 % Calciumstearat.

### Polyester 3

Ein Polybutylenterephthalatadipat mit einem MVR von 8.0 cm³/10 min.

### Polyester 4

Ein Polybutylenterephthalatsebacat mit einem MVR von 6,4 cm³/10 min.

### 1. Vergleichsbeispiel

Der Hauptextruder A der Technikumsanlage wurde mit Polyester 1 zur Ausbildung der Basisschicht auf Papier und der Nebenextruder B mit einer Mischung aus 90 % Polyester 1 und 10 % Polyester 1/Wachs Blend zur Ausbildung der Deckschicht gefahren. Die Massetemperatur betrug in beiden Fällen 250°C.

Bei einer maximalen Bahngeschwindigkeit von 80 m/min wurde eine mittlere Schichtdicke von 26 µm erreicht. Die Beschichtung ließ sich nur mit Faserriss in der Kartonmatrix ablösen. Bei Bahngeschwindigkeiten > 80 m/min ließ sich die Beschichtung zum Teil ohne Faserriss vom Karton ablösen. Fließinstabilitäten wie ein An und Abschwellen des Durchsatzes oder eine dynamische Variation der Schmelzebahnbreite (Schmelzeresonanz) traten erst ab 120 m/min auf.

Da Polyester 1 auf fossilen Rohstoffen basiert, lag der Anteil an nachwachsenden Rohstoffen in Vergleichsbeispiel bei 0%.

### 2. Vergleichsbeispiel

Unter den gleichen Bedingungen wie in Vergleichsbeispiel 1 wurde Polyester 2 anstelle von Polyester 1 (Basisschicht) und Polyester 2/Wachs Blend anstelle von Polyester 1/Wachs Blend (Deckschicht) eingesetzt.

Bei einer maximalen Bahngeschwindigkeit von 80 m/min wurde eine mittlere Schichtdicke von 28,6 µm (-10 % der Referenzschichtdicke zu Vergleichsbeispiel 1) erreicht. Die Beschichtung ließ sich nur mit Faserriss in der Kartonmatrix ablösen. Bei Bahngeschwindigkeiten > 80 m/min ließ sich die Beschichtung zum Teil ohne Faserriss vom Karton ablösen. Fließinstabilitäten wie ein An und Abschwellen des Durchsatzes oder eine dynamische Variation der Schmelzebahnbreite (Schmelzeresonanz) traten erst ab 150 m/min auf.

Die Materialeinsparung durch eine geringere Schichtdicke betrug 10 % gegenüber dem Vergleichsbeispiel 1. Der Anteil an nachwachsenden Rohstoffen lag bei 38%.

### 3. Vergleichsbeispiel

Ein Compound aus 45 % Polyester 3und 55 % Polymilchsäure (NatureWorks 3251 D) wurde in Nebenextruder B für die Deckschicht eingesetzt. Der Hauptextruder A wurde mit Polyester 1 betrieben. Die Massetemperatur betrug 255°C.

Bei einer maximalen Bahngeschwindigkeit von 120 m/min. wurde eine mittlere Schichtdicke von 19 µm (- 41 % der Referenzschichtdicke) erreicht. Die Beschichtung ließ sich nur mit Faserriss in der Kartonmatrix ablösen. Fließinstabilitäten wie ein An und Abschwellen des Durchsatzes oder eine dynamische Variation der Schmelzebahnbreite (Schmelzeresonanz) treten ab 140 m/min auf.

Die Materialeinsparung gegenüber der Referenz beträgt 41 %. Der Anteil an nachwachsenden Rohstoffen lag bei 22%.

### 4. Beispiel (nicht erfindugsgemäss)

Ein Compound aus 24 % Polyester 416 % Polyester 1 und 60 % Polymilchsäure (NatureWorks 3251 D) wurde in Haupt und Nebenextruder A und B eingesetzt. Die Massetemperatur betrug 258 °C.

Bei einer maximalen Bahngeschwindigkeit von 170 m/min wurde eine mittlere Schichtdicke von 16,5 µm (- 48 % der Referenzschichtdicke) erreicht. Die Beschichtung ließ sich nur mit Faserriss in der Kartonmatrix ablösen. Fließinstabilitäten wie ein An und Abschwellen des Durchsatzes oder eine dynamische Variation der Schmelzebahnbreite (Schmelzeresonanz) traten erst ab 240 m/min auf. Es wurde ein besonders niedriger Neck-in beobachtet.

Die Materialeinsparung gegenüber der Referenz betrug 48 %. Der Anteil an nachwachsenden Rohstoffen lag in dieser Beschichtung bei 69 %.

### 5. Beispiel - dreilagige Beschichtung (nicht erfindungsgemäss)

Der Cloeren-Feedblock der Anlage wurde so umgebaut, dass ein Aufbau AABBBCC entsteht. Zusätzlich zu dem Hauptextruder wurde der Nebenextruder C verwendet, der mit dem Extruder B vergleichbar ist. Es wurden folgende Mischungen verwendet:
Extruder B (28,5 % der Dicke, Deckschicht): Ein Compound aus 24 % Polyester 4, 16 % Polyester 3 und 60 % Polymilchsäure (NatureWorks 3251 D)
Extruder A (43 % der Dicke, mittlere Schicht): Ein Compound aus 80 % Polymilchsäure (NatureWorks 3251 D), 20 % Polyester 2
Extruder C (28,5 % der Dicke, innere Schicht): Ein Compound aus 24 % Polyester 4, 16 % Polyester 1 und 60 % Polymilchsäure (NatureWorks 3251 D)

Bei einer maximalen Bahngeschwindigkeit von 150 m/min wurde eine mittlere Schichtdicke von 21 µm (- 34 % der Referenzschichtdicke) erreicht. Die Beschichtung lässt sich nur mit Faserriss in der Kartonmatrix ablösen. Fließinstabilitäten wie ein An- und Abschwellen des Durchsatzes oder eine dynamische Variation der Schmelzebahnbreite (Schmelzeresonanz) traten erst ab 190 m/min auf. Es wurde ein niedriger Neck-in beobachtet.

Mit dieser 3-Schicht Coextrusion wurde bei einer Bahngeschwindigkeit von 150 m/min eine Materialeinsparung gegenüber der Referenz von 34 % erreicht. Der Anteil an nachwachsenden Rohstoffen betrug bei dieser Beschichtung 77 %.

Mit dem erfindungsgemäßen Verfahren lässt sich die Schmelzeresonanz weitgehend vermeiden. Es traten weiterhin keine Fließinstabilitäten (Streifen, Fließmuster oder dynamisch variierter Durchsatz) auf. Schließlich wurde eine sehr gute Haftung auf Papier/Karton erzielt. Dies äußerte sich durch einen Faserriss beim Ablösen von Papier/Karton. Es ließen sich insbesondere dünne Beschichtungen erzielen, was zu einer erheblichen Materialeinsparung führte.

## Patentansprüche

1. Verfahren zur Beschichtung von Papier durch Extrusionsverfahren, **dadurch gekennzeichnet, dass** als Beschichtungsmittel ein biologisch abbaubarer, aliphatisch-aromatischer Polyester verwendet wird, enthaltend:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0,01 bis 2 Gew.-%, bezogen auf das Gesamtgewicht der Komponenten i bis iii, eines Kettenverlängerers und /oder Vernetzers ausgewählt aus der Gruppe bestehend aus: einem di oder polyfunktionellen Isocyanat, Isocyanurat, Oxazolin, Epoxid, Carbonsäureanhydrid und /oder einem mindestens trifunktionellen Alkohol oder einer mindestens trifunktionellen Carbonsäure;
v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern und
vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;
und mit einer Schmelzevolumenrate (MVR) nach EN ISO 1133 (190°C, 2,16 kg Gewicht) von 5 bis 25 cm³/10 min.

2. Verfahren zur Beschichtung von Papier durch Extrusionsverfahren, **dadurch gekennzeichnet, dass** als Beschichtungsmittel eine Polymermischung verwendet wird, enthaltend:
- 5 bis 95 Gew.- % eines biologisch abbaubaren, aliphatisch-aromatischen Polyester gemäß Anspruch 1;
und
- 95 bis 5 Gew.-% eines oder mehrerer Polymere ausgewählt aus der Gruppe bestehend aus: Polymilchsäure, Polycaprolacton, Polyhydroxyalkanoat, Chitosan, Gluten und eines oder mehrerer aliphatisch/aromatischen Polyesters wie Polybutylensuccinat, Polybutylensuccinat-adipat oder Polybutylensuccinat-sebacat, Polybutylenterephthalt-co-adipat;
und
- 0 bis 2 Gew.-% eines Verträglichkeitsvermittlers.

3. Verfahren nach Anspruch 1 oder 2, wobei die Komponenten i) und ii) des Polyesters wie folgt definiert sind:
i) 52 bis 65 mol %, bezogen auf die Komponenten i bis ii, eines oder mehrere Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 48 bis 35 mol %, bezogen auf die Komponenten i bis ii, eines Terephthalsäurederivats.

4. Verfahren nach Anspruch 1 oder 2, wobei in Komponente i) des Polyesters Sebazinsäure oder Gemische von Sebazinsäure mit den anderen Disäuren eingesetzt werden.

5. Verfahren nach Anspruch 2, wobei die Polymermischung
- 20 bis 90 Gew.- % eines Polyesters der Komponenten i) bis vi)
- 80 bis 10 Gew.-% Polymilchsäure und
- 0 bis 2 Gew.-% eines epoxidhaltigen Poly(meth)acrylats enthält.

6. Verfahren nach Anspruch 5, wobei die Polymilchsäure eine Schmelzevolumenrate (MVR) nach EN ISO 1133 (190°C, 2,16 kg Gewicht) von 9 bis 70 cm³ aufweist.

7. Verfahren nach Anspruch 5, wobei die Polymermischung eine Schmelzevolumenrate (MVR) nach EN ISO 1133 (190°C, 2,16 kg Gewicht) von 10 bis 30 cm³/10 min aufweist.

8. Verfahren nach Anspruch 5, wobei in der Polymermischung Polymilchsäure die kontinuierliche Phase ausbildet.

9. Verfahren nach den Ansprüchen 1 bis 5, wobei die Polymermischung 0,1 bis 1 Gew.-% Nukleierungsmittel enthält.

10. Verfahren zur mehrlagigen Beschichtung von Papier nach den Ansprüchen 1 bis 9, durch das Coextrusionsverfahren.

11. Verfahren zur dreilagigen Beschichtung von Papier nach Anspruch 10 mit
i) einer äußeren Schicht enthaltend eine Mischung aus 40 bis 60 Gew.-% eines aliphatisch-aromatischen Polyesters und 60 bis 40 Gew.-% Polymilchsäure und 0 bis 10 Gew.-% einer Wachsformulierung mit Wachs, Dispergierhilfe und Antiblockmitteln;
ii) gegebenenfalls einer mittleren Schicht enthaltend 50 bis 100 Gew.-% Polymilchsäure und 0 bis 50 Gew.-% des aliphatisch-aromatischen Polyesters und
iii) einer inneren Kontaktschicht zum Karton aus 50 bis 100 % aliphatisch-aromatischen Polyesters und 0 bis 50 % Polymilchsäure.

12. Verfahren zur zweilagigen Beschichtung von Papier nach Anspruch 10 mit
i) einer äußeren Schicht enthaltend eine Mischung aus 40 bis 60 Gew.-% eines aliphatisch-aromatischen Polyesters und 60 bis 40 Gew.-% Polymilchsäure und 0 bis 10 Gew.-% einer Wachsformulierung mit Wachs, Dispergierhilfe und Antiblockmittleren und
iii) einer inneren Kontaktschicht zum Karton aus 50 bis 100 % aliphatisch-aromatischen Polyesters und 0 bis 50 % Polymilchsäure.

13. Verfahren zur Beschichtung von Papier nach den Ansprüchen 1 bis 12 zur Herstellung von Papierbeuteln für trockene Lebensmittel, Flüssigkeiten, Papiertragetaschen, Papiercoextrudate, Papierklebeband, - Kartonbechern, Yoghurtbechern, Menueschalen, gewickelte Kartonbehälter, nassfeste Kartons für Umverpackungen, Obststeigen aus beschichtetem Karton, Fast Food-Teller, Clamp Shells, Getränkekartons, Kartons für Flüssigkeiten, Gefriergutkartons, Eisverpackungen, Papieretiketten, Blumen- und Pflanztöpfe.

## Claims

1. A process for coating paper by extrusion methods, wherein the coating material used is a biodegradable, aliphatic-aromatic polyester comprising:
i) from 40 to 70 mol%, based on the components i to ii, of one or more dicarboxylic acid derivatives or dicarboxylic acids selected from the group consisting of: succinic acid, adipic acid, sebacic acid, azelaic acid and brassylic acid;
ii) from 60 to 30 mol%, based on the components i to ii, of a terephthalic acid derivative;
iii) from 98 to 102 mol%, based on the components i to ii, of a C₂-C₈-alkylenediol or C₂-C₆-oxyalkylenediol;
iv) from 0.01 to 2% by weight, based on the total weight of components i to iii, of a chain extender and/or crosslinking agent selected from the group consisting of: a di- or polyfunctional isocyanate, isocyanurate, oxazoline, epoxide, carboxylic anhydride and/or an at least trifunctional alcohol or an at least trifunctional carboxylic acid;
v) from 0.00 to 50% by weight, based on the total weight of the components i to iv, of an organic filler selected from the group consisting of: native or plasticized starch, natural fibers, wood meal and/or an inorganic filler selected from the group consisting of: chalk, precipitated calcium carbonate, graphite, gypsum, conductive carbon black, iron oxide, calcium chloride, dolomite, kaolin, silicon dioxide (quartz), sodium carbonate, titanium dioxide, silicate, wollastonite, mica, montmorillonite, talc, glass fibers and mineral fibers and
vi) from 0.00 to 2% by weight, based on the total weight of the components i to iv, of at least one stabilizer, nucleating agent, lubricant and release agent, surfactant, wax, antistatic agent, antifogging agent, dye, pigment, UV absorber, UV stabilizer or other plastics additive;
and having a melt volume rate (MVR) according to EN ISO 1133 (190°C, 2.16 kg weight) of from 5 to 25 cm³/10 min.

2. A process for coating paper by extrusion methods, wherein the coating material used is a polymer mixture comprising:
- from 5 to 95% by weight of a biodegradable, aliphatic-aromatic polyester according to claim 1,
- from 95 to 5% by weight of one or more polymers selected from the group consisting of: polylactic acid, polycaprolactone, polyhydroxyalkanoate, chitosan, gluten and one or more aliphatic/aromatic polyesters, such as polybutylene succinate, polybutylene succinate adipate or polybutylene succinate sebacate, polybutylene terephthalate-co-adipate;
and
- from 0 to 2% by weight of a compatibilizer.

3. The process according to claim 1 or 2, the components i) and ii) of the polyester being defined as follows:
i) from 52 to 65 mol%, based on the components i to ii, of one or more dicarboxylic acid derivatives or dicarboxylic acids selected from the group consisting of: succinic acid, adipic acid, sebacic acid, azelaic acid and brassylic acid;
ii) from 48 to 35 mol%, based on the components i to ii, of a terephthalic acid derivative.

4. The process according to claim 1 or 2, sebacic acid or mixtures of sebacic acid with the other dioic acids being used in component i) of the polyester.

5. The process according to claim 2, the polymer mixture comprising
- from 20 to 90% by weight of a polyester of the components i) to vi)
- from 80 to 10% by weight of polylactic acid and
- from 0 to 2% by weight of an epoxide-containing poly(meth)acrylate.

6. The process according to claim 5, the polylactic acid having a melt volume rate (MVR) according to EN ISO 1133 (190°C, 2.16 kg weight) of from 9 to 70 cm³.

7. The process according to claim 5, the polymer mixture having a melt volume rate (MVR) according to EN ISO 1133 (190°C, 2.16 kg weight) of from 10 to 30 cm³/10 min.

8. The process according to claim 5, where polylactic acid forms the continuous phase in the polymer mixture.

9. The process according to claims 1 to 5, the polymer mixture comprising from 0.1 to 1% by weight of nucleating agent(s).

10. The process for multilayer coating of paper according to claims 1 to 9 by the coextrusion method.

11. The process for three-layer coating of paper according to claim 10 with
i) an outer layer comprising a mixture of from 40 to 60% by weight of an aliphatic-aromatic polyester and from 60 to 40% by weight of polylactic acid and from 0 to 10% by weight of a wax formulation comprising wax, dispersant and antiblocking agents;
ii) optionally a middle layer comprising from 50 to 100% by weight of polylactic acid and from 0 to 50% by weight of the aliphatic-aromatic polyester and
iii) an inner layer in contact with the cardboard, comprising from 50 to 100% of aliphatic-aromatic polyester and from 0 to 50% of polylactic acid.

12. The process for two-layer coating of paper according to claim 10 with
i) an outer layer comprising a mixture of from 40 to 60% by weight of an aliphatic-aromatic polyester and from 60 to 40% by weight of polylactic acid and from 0 to 10% by weight of a wax formulation comprising wax, dispersant and antiblocking agents and
iii) an inner layer in contact with the cardboard, comprising from 50 to 100% of aliphatic-aromatic polyester and from 0 to 50% of polylactic acid.

13. The process for coating paper according to claims 1 to 12 for the production of paper bags for dry foods, liquids, paper carrier bags, paper coextrudates, paper adhesive tape, cardboard cups, yoghurt pots, meal trays, wound cardboard containers, wet-strength cartons for outer packagings, fruit boxes of coated cardboard, fast food plates, clamp shells, beverage cartons, cartons for liquids, frozen food cartons, ice packaging, paper labels, flower pots and plant pots.

## Revendications

1. Procédé pour le revêtement de papier par des procédés d'extrusion, **caractérisé en ce qu'**on utilise comme agent de revêtement un polyester aliphatique-aromatique biodégradable, contenant:
i) 40 à 70% en mole, par rapport aux composants i à ii, d'un ou de plusieurs dérivés d'acide dicarboxylique ou acides dicarboxyliques choisis dans le groupe constitué par: l'acide succinique, l'acide adipique, l'acide sébacique, l'acide azélaïque et l'acide brassylique ;
ii) 60 à 30% en mole, par rapport aux composants i à ii, d'un dérivé d'acide téréphtalique ;
iii) 98 à 102% en mole, par rapport aux composants i à ii, d'un C₂-C₈-alkylènediol ou d'un C₂-C₆-oxyalkylènediol ;
iv) 0,01 à 2% en poids, par rapport au poids total des composants i à iii, d'un agent d'allongement de chaîne et/ou d'un réticulant, choisi(s) dans le groupe constitué par: un isocyanate, un isocyanurate, une oxazoline, un époxyde, un anhydride de l'acide carboxylique difonctionnel ou polyfonctionnel et/ou un alcool au moins trifonctionnel ou un acide carboxylique au moins trifonctionnel ;
v) 0,00 à 50% en poids, par rapport au poids total des composants i à iv, d'une charge organique choisie dans le groupe constitué par: l'amidon naturel ou plastifié, les fibres naturelles, la farine de bois et/ou d'une charge inorganique choisie dans le groupe constitué par: la craie, le carbonate de calcium précipité, le graphite, le gypse, la suie conductrice, l'oxyde de fer, le chlorure de calcium, la dolomite, le kaolin, le dioxyde de silicium (quartz), le carbonate de sodium, le dioxyde de titane, le silicate, la wollastonite, le mica, la montmorillonite, le talc, les fibres de verre et les fibres minérales, et
vi) 0,00 à 2% en poids, par rapport au poids total des composants i à iv, d'au moins un(e) stabilisateur, agent de nucléation, lubrifiant et agent de démoulage, agent tensioactif, cire, antistatique, agent antibuée, colorant, pigment, absorbant des UV, stabilisateur des UV ou autre additif pour matériaux synthétiques;
et présentant un indice de fluidité à chaud en volume (MVR) selon la norme EN ISO 1133 (190°C, poids de 2,16 kg) de 5 à 25 cm³/10 min.

2. Procédé pour le revêtement de papier par des procédés d'extrusion, **caractérisé en ce qu'**on utilise comme agent de revêtement un mélange de polymères, contenant :
- 5 à 95% en poids d'un polyester aliphatique-aromatique, biodégradable selon la revendication 1 ;
et
- 95 à 5% en poids d'un ou de plusieurs polymères choisis dans le groupe constitué par: le poly(acide lactique), la polycaprolactone, le polyhydroxyalcanoate, le chitosane, le gluten et d'un ou plusieurs polyesters aliphatiques/aromatiques, tels que le poly(succinate de butylène), le poly(succinate-adipate de butylène) ou le poly(succinate-sébacate de butylène), le poly(téréphtalate-co-adipate de butylène) ; et
- 0 à 2% en poids d'un agent de compatibilité.

3. Procédé selon la revendication 1 ou 2, les composants i) et ii) du polyester étant définis comme suit :
i) 52 à 65% en mole, par rapport aux composants i à ii, d'un ou de plusieurs dérivés d'acide dicarboxylique ou acides dicarboxyliques choisis dans le groupe constitué par: l'acide succinique, l'acide adipique, l'acide sébacique, l'acide azélaïque et l'acide brassylique ;
ii) 48 à 35% en mole, par rapport aux composants i à ii, d'un dérivé d'acide téréphtalique.

4. Procédé selon la revendication 1 ou 2, de l'acide sébacique ou des mélanges d'acide sébacique avec les autres diacides étant utilisé(s) dans le composant i) du polyester.

5. Procédé selon la revendication 2, le mélange de polymères contenant
- 20 à 90% en poids d'un polyester des composants i) à vi)
- 80 à 10% en poids de poly(acide lactique) et
- 0 à 2% en poids d'un poly(méth)acrylate contenant un époxyde.

6. Procédé selon la revendication 5, le poly(acide lactique) présentant un indice de fluidité à chaud en volume (MVR) selon la norme EN ISO 1133 (190°C, poids de 2,16 kg) de 9 à 70 cm³.

7. Procédé selon la revendication 5, le mélange de polymères présentant un indice de fluidité à chaud en volume (MVR) selon la norme EN ISO 1133 (190°C, poids de 2,16 kg) de 10 à 30 cm³/10 min.

8. Procédé selon la revendication 5, le poly(acide lactique) formant la phase continue dans le mélange de polymères.

9. Procédé selon les revendications 1 à 5, le mélange de polymères contenant 0,1 à 1% en poids d'agent de nucléation.

10. Procédé pour le revêtement en plusieurs couches de papier selon les revendications 1 à 9 par un procédé de coextrusion.

11. Procédé pour le revêtement en trois couches de papier selon la revendication 10, présentant
i) une couche extérieure, contenant un mélange de 40 à 60% en poids d'un polyester aliphatique-aromatique et 60 à 40% en poids de poly(acide lactique) et 0 à 10% en poids d'une formulation de cire, contenant de la cire, des adjuvants de dispersion et des agents antiadhésifs ;
ii) le cas échéant une couche centrale contenant 50 à 100% en poids de poly(acide lactique) et 0 à 50% en poids du polyester aliphatique-aromatique et
iii) une couche de contact interne avec le carton constitué par 50 à 100% de polyester aliphatique-aromatique et 0 à 50% de poly(acide lactique).

12. Procédé pour le revêtement en deux couches de papier selon la revendication 10, présentant
i) une couche extérieure, contenant un mélange de 40 à 60% en poids d'un polyester aliphatique-aromatique et 60 à 40% en poids de poly(acide lactique) et 0 à 10% en poids d'une formulation de cire, contenant de la cire, des adjuvants de dispersion et des agents antiadhésifs et
iii) une couche de contact interne avec le carton constitué par 50 à 100% de polyester aliphatique-aromatique et 0 à 50% de poly(acide lactique).

13. Procédé pour le revêtement de papier selon les revendications 1 à 12 pour la fabrication de sachets en papier pour aliments secs, liquides, de sacs en papier, de produits coextrudés en papier, d'une bande adhésive en papier, de gobelets en carton, de gobelets à yoghourt, de raviers pour menus, de récipients en carton enroulés, de cartons résistants à l'humidité pour suremballages, de cageots à fruits en carton revêtu, d'assiettes destinées à la restauration rapide, d'emballages de type coquille, de cartons pour boissons, de cartons pour liquides, de cartons de congélation, d'emballages pour glaces, d'étiquettes en papier, de pots pour fleurs et plantes.
